# EUROPEAN PATENT APPLICATION

(11) **EP 4 803 385 A1**
(43) Date of publication of application: **09.09.2026**
(21) Application number: 26162942.2
(22) Date of filing: 06.03.2026
(51) Int. Cl.: B60T 8/172, B60T 8/175, B60W 30/045, B60W 30/18, B60W 40/068

(54) **METHOD AND APPARATUS FOR DETECTING A WHEEL SPEED RIPPLE**

(30) Priority: 07.03.2025 GB 202503383
(71) Applicant: Jaguar Land Rover Limited, Coventry, Warwickshire CV3 4LF (GB)
(72) Inventor: Silk, James, Coventry, CV3 4LF (GB); Frampton, Thomas, COVENTRY, CV3 4LF (GB); Walker, Stuart, COVENTRY, CV3 4LF (GB)
(74) Representative: Jaguar Land Rover Patents Department

(57) **Abstract**

Aspects of the present invention relate to a control system (1) for controlling detection of a wheel slip event (SEV(n)) on a vehicle (5) having a plurality of wheels (W(n)). The control system (1) includes one or more processors (120) collectively configured to receive a steer angle signal (SAS1) indicating a steer angle (α) of the vehicle (5) to perform a turn manoeuvre (T1, T2); and to determine which one of the wheels (W(n)) is an inside rear wheel (W(n)) of the vehicle (5) in dependence on the steer angle signal (SAS1), the inside rear wheel (W(n)) being disposed on an inside of the turn manoeuvre. The one or more processors (120) receive at least one wheel speed signal (SL(n))) indicating a wheel speed (S(n)) of each of the plurality of wheels (W(n)). A fastest wheel speed (S(n)) of the plurality of wheels (W(n)) is determined. One or more inside rear wheel speed ripple (WSR(n)) is detected in dependence on a determination that the wheel speed (S(n)) of the inside rear wheel (W(n)) is the fastest wheel speed (S(n)). The detection of a wheel slip event (SEV(n)) on at least the inside rear wheel (W(n)) is controlled in dependence on detection of the one or more wheel speed ripple WSR(n) in the wheel speed (S(n)). Aspects of the present invention also relate to a vehicle (5); and a method (200).

## Description

### TECHNICAL FIELD

The present disclosure relates to a method and apparatus for detecting a wheel speed ripple. More particularly, but not exclusively, the present disclosure relates to a method and apparatus for controlling detection of a wheel slip event in dependence on detection of a ripple in a wheel speed. Aspects of the invention relate to a control system, a system, a vehicle and a method.

### BACKGROUND

It is known to provide a vehicle with a control system for detecting a wheel slip event when a driven wheel of the vehicle loses traction and slips relative to the contact surface. The detection of a wheel slip event may be used to control the operating parameter(s) of one or more vehicle subsystems, for example by selecting a vehicle drive mode suitable for the current conditions. A wheel skip event may occur when one or more wheel skip relative to the surface on which the vehicle is operating. The wheel skip event may, for example, occur on an inside rear wheel during a turning manoeuvre. It has been recognised that a wheel skip event may cause a false positive detection of a wheel slip event. This may result in an inappropriate or unnecessary change to the one or more vehicle operating parameter.

It is an aim of the present invention to address one or more of the disadvantages associated with the prior art.

### SUMMARY OF THE INVENTION

Aspects and embodiments of the invention provide a control system, a system, a vehicle and a method as claimed in the appended claims.

According to an aspect of the present invention there is provided a control system for controlling detection of a wheel slip event on a vehicle having a plurality of wheels; the control system comprising one or more processors collectively configured to:
receive a steer angle signal indicating a steer angle of the vehicle to perform a turn manoeuvre;
determine which one of the wheels is an inside rear wheel of the vehicle in dependence on the steer angle signal, the inside rear wheel being disposed on an inside of the turn manoeuvre;
receive at least one wheel speed signal indicating a wheel speed of each of the plurality of wheels;
determine a fastest wheel speed of the plurality of wheels;
detect one or more inside rear wheel speed ripple in dependence on a determination that the wheel speed of the inside rear wheel is the fastest wheel speed; and
control detection of a wheel slip event on at least the inside rear wheel in dependence on detection of the one or more inside rear wheel speed ripple.

The plurality of wheels comprise at least one front wheel and at least one rear wheel. The control system determines which of the plurality of wheels is the inside rear wheel in relation to the turn manoeuvre indicated by the steer angle signal. During a turn manoeuvre, the wheel speed of the inside rear wheel is expected to be less than the wheel speed of the other wheels. However, a wheel skip event may occur whereby the inside rear wheel skips relative to the ground. The wheel skip event may occur when the steer angle is large, for example approaching or at a maximum steer angle of the vehicle (corresponding to a steering wheel being disposed in a full-lock position). One or more fluctuation in the measured wheel speed may occur during the wheel skip event. The one or more fluctuations may cause the one or more inside rear wheel speed ripple. The or each inside rear wheel speed ripple comprises or consists of a ripple (i.e. a fluctuation) in the wheel speed of the inside rear wheel. The wheel speed of the inside rear wheel may momentarily be larger than the wheel speed of the other wheels of the vehicle; this may erroneously be identified as a wheel slip event in which a driven wheel of the vehicle loses traction and slips relative to the surface. The control system is configured to detect one or more inside rear wheel speed ripple. This may be detected in dependence on a determination that the wheel speed of the inside rear wheel is the fastest wheel speed. The wheel speed of the inside rear wheel is compared directly or indirectly to the wheel speed of each of the wheels. The fastest wheel speed may be identified and then compared to the wheel speed of the inside rear wheel. For example, a difference between the fastest wheel speed and the wheel speed of the inside rear wheel may be calculated. The wheel speed of the inside rear wheel may be identified as the fastest wheel speed in dependence on a determination that the difference is zero (0) or less than a predetermined difference threshold.

The control system is configured to detect the presence of the one or more inside rear wheel speed ripple (i.e. a positive determination of a wheel speed ripple) in dependence on a determination that the wheel speed of the inside rear wheel is greater than the wheel speed of the one or more other wheels. The control system is configured to detect the absence of the one or more inside rear wheel speed ripple (i.e. a negative determination of a wheel speed ripple) in dependence on a determination that the wheel speed of the inside rear wheel is less than the wheel speed of the one or more other wheels. The detection of the one or more inside rear wheel speed ripple is indicative of a wheel skip event at the inside rear wheel. The wheel skip event is distinct from a wheel slip event. At least in certain embodiments, the control system may differentiate between a wheel slip event and a wheel skip event by detecting the one or more inside rear wheel speed ripple. The control system is configured to control detection of the wheel slip event in dependence on the detection of the one or more inside rear wheel speed ripple. At least in certain embodiments, the control system may alter the one or more indicator parameter used to detect a wheel slip event in dependence on detection of the one or more inside rear wheel speed ripple, for example to reduce the sensitivity for detecting the wheel slip event. Alternatively, the control system may inhibit or disable detection of a wheel slip event. This may reduce a false positive detection of a wheel slip event.

The control system may comprise one or more controllers collectively comprising at least one electronic processor having an electrical input for receiving an input signal; and at least one memory device electrically coupled to the at least one electronic processor and having instructions stored therein. The input signal may comprise a steer angle signal indicating a steer angle of the vehicle; and at least one wheel speed signal indicating the wheel speed of each of the plurality of wheels. The at least one electronic processor is configured to access the at least one memory device and execute the instructions thereon so as to:
determine which one of the wheels is an inside rear wheel of the vehicle in dependence on the steer angle signal, the inside rear wheel being disposed on an inside of the turn manoeuvre;
compare the wheel speed of the inside rear wheel to the wheel speed of one or more of the other wheels;
detect one or more inside rear wheel speed ripple in dependence on a determination that the wheel speed of the inside rear wheel is greater than the wheel speed of the one or more other wheels; and
control detection of a wheel slip event on at least the inside rear wheel in dependence on detection of the one or more inside rear wheel speed ripple.

The steer angle may represent an angular position of a steering wheel for steering the vehicle. The steer angle may be measured relative to a neutral, straight-ahead position of the steering wheel. The steer angle may be zero (0°) when the steering wheel is in the straight-ahead position. For example, the steer angle may have a positive value for a turn manoeuvre in a first direction; and may have a negative value for a turn manoeuvre in a second direction. The first and second directions are opposite to each other. Other reference frames may be defined for the steer angle.

The inside rear wheel may be identified in dependence on the steer angle. The inside rear wheel may be identified as being on a first side of the vehicle in dependence on a determination that the steer angle corresponds to a turn manoeuvre in the first direction. The inside rear wheel may be identified as being on a second side of the vehicle in dependence on a determination that the steer angle corresponds to a turn manoeuvre in the second direction. A turn manoeuvre in the first direction may correspond to a right turn manoeuvre in which the inside rear wheel is the right rear wheel of the vehicle. A turn manoeuvre in the second direction may correspond to a left turn manoeuvre in which the inside rear wheel is the left rear wheel of the vehicle. The first and second directions may be reversed.

The at least one wheel speed signal may be received from one or more wheel speed sensor. The at least one wheel speed signal may be received directly or indirectly from a wheel speed sensor. For example, the at least one wheel speed signal may be received from an anti-lock brake system which receives the at least one wheel speed signal from one or more wheel speed sensor. The at least one wheel speed signal may comprise or consist of a raw wheel speed signal (i.e., an unfiltered wheel speed signal). The wheel speed signal may represent an instantaneous wheel speed.

Alternatively, or in addition, the detection of the one or more inside rear wheel speed ripple may comprise comparing the fastest wheel speed to a wheel speed threshold. The one or more inside rear wheel speed ripple may be detected in dependence on a determination that the fastest wheel speed is greater than or equal to the wheel speed threshold.

The wheel speed threshold may comprise a predefined value. The wheel speed threshold may have a fixed value. For example, the wheel speed threshold may be defined as 5km/h, 10m/h or 15km/h. Alternatively, the wheel speed threshold may be variable. The wheel speed threshold may be calculated in dependence on one or more operating parameter of the vehicle. For example, the wheel speed threshold may be calculated in dependence on a vehicle speed. The one or more processors may be collectively configured to receive a vehicle speed signal indicating the vehicle speed. The wheel speed threshold may be determined in dependence on the vehicle speed indicated by the vehicle speed signal.

The one or more processors may be configured to determine the wheel speed threshold by multiplying the vehicle speed by a gain value. The gain value may be predefined. The gain value may be fixed. Alternatively, the gain value may be dynamic. The gain value may be determined in dependence on one or more of the steer angle and the vehicle speed. The gain value may be directly proportional to the steer angle. The gain value (and, therefore, the vehicle speed threshold) may increase as the steer angle increases. The gain value may be inversely proportional to the steer angle. The gain value (and, therefore, the vehicle speed threshold) may decrease as the steer angle increases.

The one or more inside rear wheel speed ripple may be detected in dependence on a determination that the steer angle is greater than a steer angle threshold. An absolute value of the steer angle may be compared to the steer angle threshold. The one or more inside rear wheel speed ripple may be detected in dependence on a determination that an absolute value of the steer angle is greater than the steer angle threshold. The steer angle threshold may be predefined. The steer angle threshold may be fixed. Alternatively, the steer angle threshold may be variable. For example, the steer angle threshold may vary in dependence on the vehicle speed.

A maximum steer angle may be defined in respect of each of the first and second directions. The maximum steer angle may, for example, be dependent on a geometry of a steering system. The steering wheel is disposed in a full-lock position (in the first direction or the second direction) at the maximum steer angle. By way of example, the maximum steer angle in each of the first and second directions may be ±4 radians (approximately 230°) corresponding to a steer angle range of 8 radians (approximately 460°). Other steer angle ranges are contemplated. The steer angle threshold may be defined as a proportion of the maximum steer angle in each of the first and second directions. For example, the steer angle threshold may be defined as 60%, 70%, 80%, 90%, 95% or 100% of the maximum steer angle. At least in certain embodiments, the steer angle threshold may be defined as 62.5% of the maximum steer angle. In the above example in which the maximum steer angle is ±4 radians in each direction, the steer angle threshold may be defined as approximately 2.5 radians in each direction.

The determination that the wheel speed of the inside rear wheel is the fastest wheel speed may comprise directly or indirectly comparing the wheel speeds of the wheels. The wheel speeds may be compared to determine the fastest wheel speed. The wheel speed of the inside rear wheel may be compared to the fastest wheel speed. The inside rear wheel may be identified as having the fastest wheel speed in dependence on a determination that the wheel speed of the inside rear wheel is substantially equal to the fastest wheel speed. A wheel speed delta may be determined by calculating a difference between the wheel speed of the inside rear wheel and the fastest wheel speed. The wheel speed delta may be compared to a speed difference threshold. The inside rear wheel may be identified as having the fastest wheel speed in dependence on a determination that the wheel speed delta is less than or equal to the speed difference threshold.

According to a further aspect of the present invention there is provided a system comprising the control system described herein and at least one vehicle control unit for controlling at least one vehicle subsystem of the vehicle. The at least one vehicle control unit may be configured to inhibit changes to the one or more vehicle subsystem of the vehicle in dependence on detection of the one or more inside rear wheel speed ripple. The detection of the one or more inside rear wheel speed ripple is indicative of a wheel skip event, rather than a wheel slip event. The at least one vehicle control unit may be controlled to inhibit selection of a drive mode for operating on a surface having a low surface friction in dependence on the detection of the one or more inside rear wheel speed ripple. By detecting the one or more inside rear wheel speed ripple, the control system may differentiate between a wheel slip event and a wheel skip event. By inhibiting changes to the one or more vehicle subsystem in dependence on the detection of the one or more inside rear wheel speed ripple, the vehicle control unit may avoid or reduce unnecessary changes when a wheel skip event occurs.

According to a further aspect of the present invention there is provided a system comprising the control system described herein and at least one vehicle control unit for selecting one of a plurality of vehicle drive modes. The vehicle drive modes each define at least one control parameter for one or more vehicle subsystem. The vehicle drive modes each define one or more operating parameter of at least one vehicle subsystem. The at least one vehicle control unit is configured to inhibit changes to the selected one of the vehicle drive modes in dependence on detection of the one or more inside rear wheel speed ripple. The change to the vehicle drive mode may be appropriate for a wheel slip event, for example when operating on a surface having a low coefficient of friction. However, these changes may not be required or may be inappropriate when a wheel skip event occurs. By detecting the one or more inside rear wheel speed ripple, the control system may differentiate between a wheel slip event and a wheel skip event. By inhibiting changes to the vehicle drive mode in dependence on the detection of the one or more inside rear wheel speed ripple, the vehicle control unit may avoid or reduce unnecessary changes to the vehicle drive mode when a wheel skip event occurs.

According to a further aspect of the present invention there is provided a system comprising the control system described herein and a surface friction estimator for estimating a surface friction of the surface on which the vehicle is operating. The surface friction estimator may be configured to inhibit estimation of the surface friction in dependence on detection of the one or more inside rear wheel speed ripple. The surface friction estimator may, for example, be configured to hold the estimated surface friction in dependence on detection of the one or more inside rear wheel speed ripple. The estimated surface friction may be held constant while the wheel speed ripple is detected.

According to a further aspect of the present invention there is provided a vehicle comprising a control system as described herein; or a system as described herein.

According to a further aspect of the present invention there is provided a method for controlling detection of a wheel slip event for a vehicle having a plurality of wheels; the method comprising:
determining a steer angle of the vehicle to perform a turn manoeuvre;
identify which one of the plurality of wheels is an inside rear wheel of the vehicle in dependence on the steer angle, the inside rear wheel being disposed on an inside of the turn manoeuvre;
determine the wheel speed of each of the plurality of wheels;
determine a fastest wheel speed of the plurality of wheels;
detect one or more inside rear wheel speed ripple on the inside rear wheel in dependence on a determination that the wheel speed of the inside rear wheel is the fastest wheel speed; and
control detection of a wheel slip event on at least the inside rear wheel in dependence on detection of the one or more inside rear wheel speed ripple.

The or each inside rear wheel speed ripple comprise or consist of a ripple (i.e. a fluctuation) in the wheel speed of the inside rear wheel. The detection of the one or more inside rear wheel speed ripple may comprise comparing the fastest wheel speed to a wheel speed threshold. The one or more inside rear wheel speed ripple may be detected in dependence on a determination that the fastest wheel speed is greater than or equal to the wheel speed threshold.

The wheel speed threshold may comprise a predefined value. The wheel speed threshold may have a fixed value. For example, the wheel speed threshold may be defined as 5km/h, 10m/h or 15km/h. Alternatively, the wheel speed threshold may be variable. The wheel speed threshold may be calculated in dependence on one or more operating parameter of the vehicle. For example, the wheel speed threshold may be calculated in dependence on a vehicle speed. The one or more processors may be collectively configured to receive a vehicle speed signal indicating the vehicle speed. The wheel speed threshold may be determined in dependence on the vehicle speed indicated by the vehicle speed signal.

The one or more inside rear wheel speed ripple may be detected in dependence on a determination that the steer angle is greater than a steer angle threshold. An absolute value of the steer angle may be compared to the steer angle threshold. The one or more inside rear wheel speed ripple may be detected in dependence on a determination that an absolute value of the steer angle is greater than the steer angle threshold. The steer angle threshold may be predefined. The steer angle threshold may be fixed. Alternatively, the steer angle threshold may be variable. For example, the steer angle threshold may vary in dependence on the vehicle speed.

According to a further aspect of the present invention there is provided computer readable instructions which, when executed by one or more processors, cause the one or more processors to perform the method described herein.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 shows a schematic representation of a vehicle comprising a control system in accordance with an embodiment of the present invention;
Figure 2 shows a schematic representation of the integration of the control system with the vehicle subsystems;
Figure 3 illustrates the vehicle shown in Figure performing a right turn manoeuvre;
Figure 4 is a plot representing the measured wheel speeds of each of the wheels in the vehicle during a turn manoeuvre in which wheel skip occurs on the inside rear wheel;
Figure 5 is a schematic representation of a controller for the control system in accordance with an embodiment of the present invention;
Figure 6 shows a block diagram representing a method in accordance with an embodiment of the present invention; and
Figure 7 shows a block diagram illustrating the modification of the measured wheels speeds to compensate for the vehicle dynamics during a turn manoeuvre.

### DETAILED DESCRIPTION

A control system 1 and a method 200 for controlling detection of a wheel slip event SEV(n) in accordance with an embodiment of the present invention is described herein with reference to the accompanying Figures.

The vehicle 5 is described herein with reference to a reference frame comprising a longitudinal axis X, a transverse axis Y and a vertical axis Z. The reference signs herein include a suffix in the form of a whole number to differentiate between a plurality of like components on the vehicle 5. The same suffix is applied for components associated with each other, for example components forming part of the same sub-assembly of the vehicle 5. The integer n is used herein to identify a signal or event relating to a corresponding one of a plurality of features of the vehicle 5.

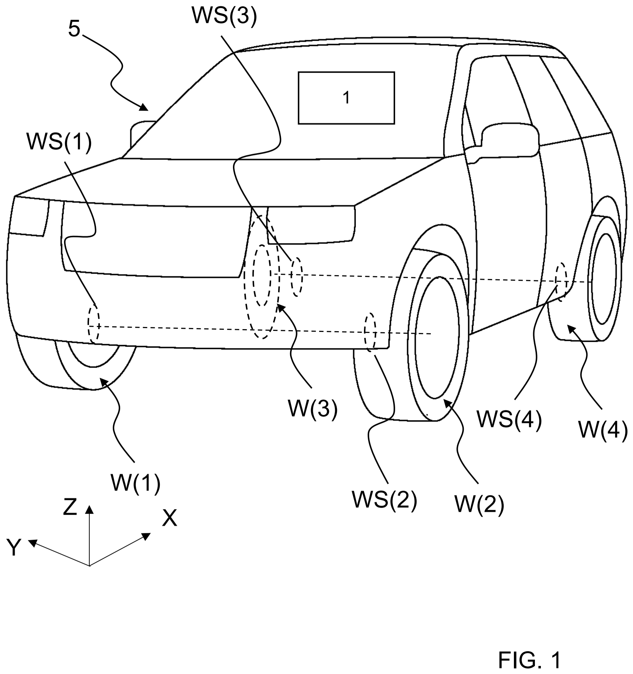

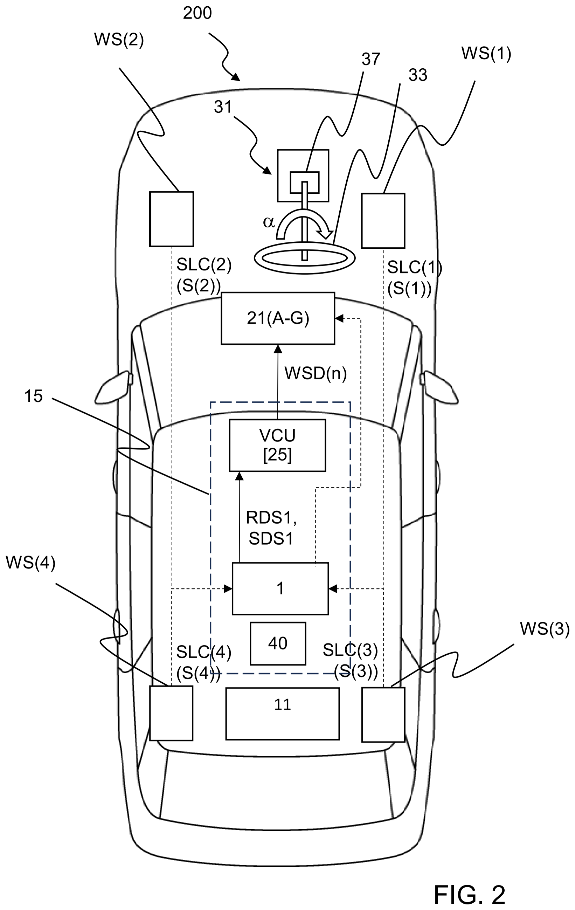

As shown in Figure 1, the control system 1 is installed in a vehicle 5 comprising four (4) wheels W(1)-W(4). The vehicle 5 is a road vehicle, such as an automobile, a sports utility vehicle (SUV) or a utility vehicle. As shown in Figures 1 and 2, the vehicle 5 in the present embodiment is an automobile. The vehicle 5 comprises one or more torque-generating machine 11, such as an internal combustion engine (ICE) and/or an electric drive unit. The vehicle 5 may be a battery electric vehicle (BEV), a hybrid electric vehicle (HEV), a plug-in hybrid electric vehicle (PHEV) or an internal combustion engine (ICE) vehicle. The front wheels W(1), W(2) and/or the rear wheels W(3), W(4) may be driven by the one or more torque-generating machine 11. In the present embodiment, the vehicle 5 is two-wheel drive and the rear wheels W(3), W(4) are driven by the one or more torque-generating machine 11. In a variant, the vehicle 5 may be four-wheel drive and the one or more torque-generating machine 11 may drive each of the wheels W(1)-W(4).

The vehicle 5 comprises a plurality of wheel speed sensors WS(1)-WS(4). Each of the wheel speed sensors WS(1)-WS(4) is associated with one of the wheels W(1)-W(4). The wheel speed sensors WS(1)-WS(4) are configured to measure a rotational speed of the wheels W(1)-W(4). The wheel speed sensors WS(1)-WS(4) in the present embodiment are the wheel speed sensors WS(1)-WS(4) used in an anti-lock brake system. The wheel speed sensors WS(1)-WS(4) measure a rotational speed of the wheels W(1)-W(4). The wheel speed sensors WS(1)-WS(4) are calibrated to output sensor signals SLC(1)-SLC(4) indicating an instantaneous wheel speed S(1)-S(4) of each of the wheels W(1)-W(4). In the present embodiment, the sensor signals SLC(1)-SLC(4) indicating a raw wheel speed S(1)-S(4), i.e. an unfiltered wheel speed. The wheel speed S(1)-S(4) in the present embodiment comprises a linear (directional) velocity calculated by multiplying the wheel rotational angular speed with a nominal rolling radii of the wheels W(1)-W(4). The sensor signals SLC(1)-SLC(4) are in the form of linear velocity signals SLC(1)-SLC(4). Each linear velocity signal SLC(1)-SLC(4) is indicative of the linear velocity of a respective one of the wheels W(1)-4. The linear velocity signals SLC(1)-SLC(4) are output to the control system 1. In a variant, the wheel speed S(1)-S(4) may comprise the rotational speed of each of the wheels W(1)-W(4). The sensor signals SLC(1)-SLC(4) may comprise rotational velocity signals. It will be understood that the linear velocity and rotational speed are directly proportional to each other and may be used interchangeably.

The control system 1 according to the present embodiment is configured to detect a wheel slip event SEV(n) in one or more of the wheels W(1)-W(4). The wheel slip event SEV(n) is indicative of the wheel(s) W(1)-W(4) slipping relative to the surface on which the vehicle 5 is operating. The rotational speed of the wheel W(1)-W(4) increases as the wheel W(1)-W(4) slips relative to the surface. There is a corresponding increase in the linear velocity output by the wheel speed sensors WS(1)-WS(4). The wheel slip event SEV(n) typically occurs due to a loss of traction at a contact patch between the wheel W(1)-W(4) and a surface on which the vehicle 5 is operating. The loss of traction allows the driven wheel(s) W(1)-W(4) to slip relative to the surface. The wheel slip event SEV(n) may occur when the torque applied to the wheel W(1)-W(4) by the torque-generating machine 11 exceeds the available traction. The available traction is dependent on the friction between the surface and each wheel W(1)-W(4) of the vehicle 5. The friction is represented by a coefficient of friction (µ) which varies depending on the properties of the surface on which the vehicle 5 is operating. The wheel slip event SEV(n) may be detected in dependence on a determination that the wheel speed of one or more of the wheels W(1)-W(4) is greater than the wheel speed of the other wheels W(1)-W(4). As described herein, certain operating conditions for the vehicle 5 may result in a false positive detection of a wheel slip event SEV(n). As described herein, the control system 1 and the method 200 according to the present embodiment help to reduce the detection of false positive wheel slip events SEV(n).

The vehicle 5 comprises a steering system (denoted generally by the reference numeral 31) for steering the vehicle 5. The steering system 31 is configured to adjust the orientation of the front wheels W(1), W(2) relative to the longitudinal axis X to control the direction of travel of the vehicle 5. The vehicle 5 may optionally comprise a rear-wheel steering system (not shown) for steering the rear wheels W(3), W(4). In the present embodiment, the steering system 31 is operated by a driver of the vehicle 5. In a variant, the steering system 31 may be operated in dependence on an autonomous or semi-autonomous vehicle control system (not shown).

The steering system 31 comprises a steering wheel 33 mounted on a steering shaft 35. The steering shaft 35 is rotatable about a central axis based on operation of the steering wheel 33. The steering shaft 35 is rotatable in opposite directions from a central (straight-ahead) position to perform right- and left turn manoeuvres (T1, T2). A steer angle sensor 37 is provided for measuring a steer angle α of the steering wheel 33. The steer angle α represents the angular position of the steering wheel 33. The steer angle α is measured with respect to the central (straight-ahead) position and may have a positive or negative value. The steer angle α is a positive variable for a right turn manoeuvre T1 and is a negative variable for a left turn manoeuvre T2. A maximum steer angle α(max) is defined in each rotational direction (corresponding to a full-lock position of the steering wheel 33). The maximum steer angle α(max) is dependent on the geometry of the steering system 31. The maximum steer angle α(max) may, for example, be ±230°. The angular range between the maximum steer angle α(max) in each direction is referred to herein as the lock-to-lock steer angle range. The lock-to-lock steer angle range may be less than or greater than one turn (i.e. less than or greater than 360°). In the present embodiment, the lock-to-lock steer angle range is approximately 460° (8 radians). The relationship between the angular position of the steering shaft 35 and the orientation of the front wheels W(1), W(2) is determined by a steer ratio. The steer ratio may be variable, but in the present embodiment the steer ratio is fixed. The steer angle sensor 37 comprises a rotary encoder (not shown). Other types of sensor are contemplated. In use, the steer angle sensor 37 outputs a steer angle signal SAS1 representing the steer angle α. The steering system 31 comprises an Electric Power Assist System (EPAS) having an electric actuator (not shown) for providing a controlled assist torque to the steering system 31. In a variant, a hydraulic actuator may be provided to provide the controlled assist torque. In a variant, an autonomous or semi-autonomous vehicle control system (not shown) is configured to output steering control signals to the EPAS 15. The steering system 31 in the present embodiment is mechanically connected to the front wheels W(1), W(2) of the vehicle 5. In a variant, the steering system 31 may be a steer-by-wire system which does not include a mechanical connection between the steering wheel 33 and the front wheels W(1), W(2).

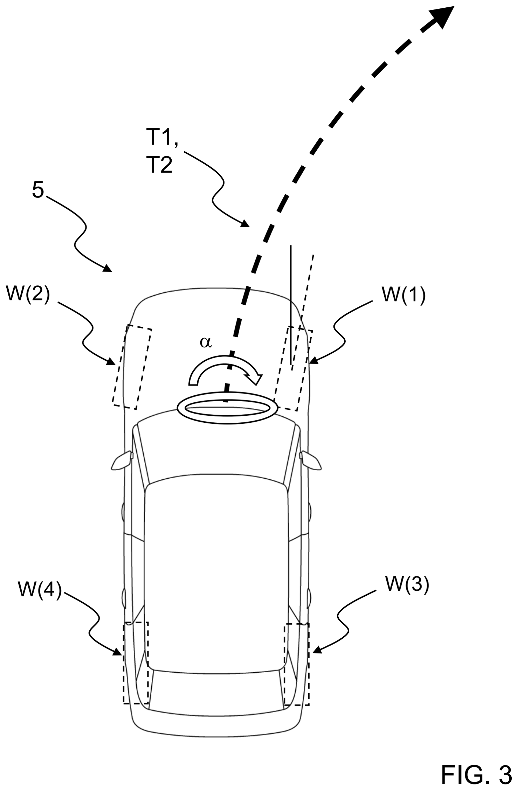

The steering system 31 is operated to control the vehicle 5 to perform a turn manoeuvre. The turn manoeuvre may comprise a left turn manoeuvre or a right turn manoeuvre. The turn manoeuvre may be performed when the vehicle 5 is travelling in a forward direction or reversing. Unless indicated to the contrary, the operation of the control system 1 is described herein with reference to the vehicle 5 travelling in the forward direction. It will be understood that the control system 1 and the method 200 are applicable also to operation of the vehicle 5 when reversing. The wheels W(n) on the inside of the turn manoeuvre are referred to herein as the inside wheels; and the wheels on the outside of the turn manoeuvre are referred to herein as the outside wheels. The inside wheels travel a shorter distance than the outside wheels as the vehicle 5 performs the turn manoeuvre. During the turn manoeuvre, the wheel speed of the inside wheels is expected to be less than the wheel speed of the outside wheels. When performing a turn manoeuvre comprising a left turn, the wheels W(1), W(3) on the left hand side of the vehicle 5 (with respect to the direction of travel) are the inside wheels; and the wheels W(2), W(4) on the right hand side of the vehicle 5 (with respect to the direction of travel) are the outside wheels. Conversely, when performing a turn manoeuvre comprising a right turn, the wheels W(1), W(3) on the left hand side of the vehicle 5 (with respect to the direction of travel) are the outside wheels; and the wheels W(2), W(4) on the right hand side of the vehicle 5 (with respect to the direction of travel) are the inside wheels. The vehicle 5 is illustrated performing a right turn manoeuvre in Figure 3. The operation of the control system 1 will be described with reference to the illustrated right turn manoeuvre in which the right-hand wheel W(3) is the inside rear wheel. It will be understood that the same approach is applicable for a left turn manoeuvre. An absolute value of the steer angle |α| may be used.

When the steer angle α is large, for example approaching or equal to the maximum steer angle α(max), the rear wheel W(3), W(4) on the inside of the resulting turn manoeuvre (referred to herein as the "inside rear wheel") may experience wheel skip. In particular, the inside rear wheel may skip or move relative to the surface. The wheel speed of the inside rear wheel increases momentarily during the wheel skip. This results in a spike in the measured wheel speed of the inside rear wheel. The or each wheel skip has a short duration and one or more wheel skip may occur during the turn manoeuvre. The wheel speed S(3) of the inside rear wheel W(3) may comprise one or more ripple as the vehicle 5 performs the turn manoeuvre. The or each ripple is in the form of a spike or peak in the wheel speed S(3) of the inside rear wheel W(3). The one or more ripple in the wheel speed S(3) is referred to herein as a wheel speed ripple WSR(n). The wheel speed ripple WSR(n) may be referred to as a steering lock wheel speed ripple WSR(n) since the steering wheel 33 is typically at or close to the full lock position. The inside rear wheel W(3) is more likely to experience wheel skip at low (non-zero) speeds on a surface having a low coefficient of friction, such as ice, gravel or wet grass. The reduced friction allows the inside rear wheel W(3) to skip relative to the surface more readily.

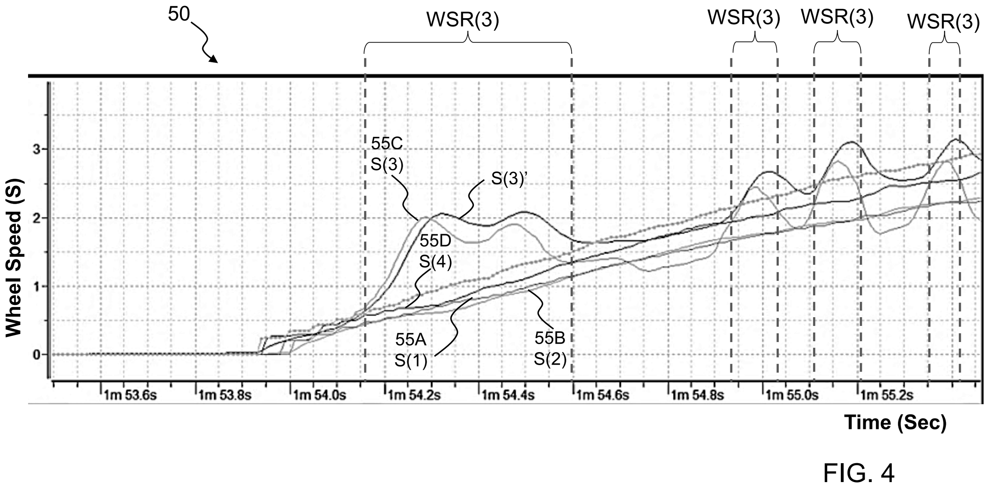

A first plot 50 showing the measured wheel speeds S(1)-S(4) of each of the wheels W(1)-W(4) with respect to time during a turn manoeuvre is shown in Figure 4. The first plot 50 comprises first-, second-, third- and fourth-wheel speed traces 55A-55D representing the wheel speeds S(1)-S(4) of the first, second, third and fourth wheels W(1)-W(4) respectively. The steer angle α for the turn manoeuvre in this example is at least substantially equal to the maximum steer angle α(max). The wheel speeds S(1)- S(4) in the illustrated example are captured while the vehicle 5 is operating on a surface having a low coefficient of friction (µ). The vehicle 5 is travelling at a low (non-zero) vehicle speed, for example less than or equal to 5km/h or 10km/h. A wheel skip is induced on the inside rear wheel W(3) resulting in a wheel speed ripple WSR(3) in the measured wheel speed S(3). This is represented in Figure 4 by a plurality of ripples 57-n in the third wheel speed trace wheel speed S(3) of the inside rear wheel W(3).

A plurality of vehicle drive modes are defined for different operating conditions/terrain. Each vehicle drive mode defines an operating parameter/range for one or more vehicle subsystem. The or each operating parameter/range is typically predefined to configure the vehicle 5 to operate in a particular set of conditions or in a particular terrain type. The terrain type may be selected from one or more of the following terrain types: ice, grass, gravel, snow, sand, rocks, mud and road. The control system 1 is configured to select one of the vehicle drive modes depending on one or more indicator. The one or more indicator in the present embodiment comprises detection of a wheel slip event SEV(n) at one or more of the wheels W(1)-W(4). It has been recognised that the aforementioned wheel speed ripple WSR(3) in the wheel speed S(3) of the inside rear wheel W(3) may cause the control system 1 erroneously to detect a wheel slip event SEV(n), i.e. to make a false positive detection of a wheel slip event SEV(n). In particular, the wheel speed ripple WSR (3) may cause the wheel speed of the inside rear wheel W(3) to be greater than that of the other wheels W(1), W(2), W(4). The one or more wheel speed ripple in the measured wheel speed of the rear inside wheel W(3) may erroneously be identified as a wheel slip event SEV(3) on the rear inside wheel W(3). Thus, the control system 1 may make a false positive detection of a wheel slip event SEV(3). The false positive detection of the wheel slip event SEV(3) may cause the control system 1 to change a selected vehicle drive mode. Changing the selected vehicle drive mode in dependence on detection of a false positive wheel slip event SEV(n) may not be appropriate or may be unnecessary.

The control system 1 in the present embodiment is configured to control the detection of a wheel slip event SEV(n) in dependence on an operating state of the vehicle 5. In particular, the control system 1 is configured to control the detection of the wheel slip event SEV(n) in dependence on the detection of a wheel speed ripple WSR(3) in the wheel speed S(3) of the inside rear wheel (W3) of the vehicle 5 during a turn manoeuvre. The operation of the control system 1 is described herein with reference to the performance of a right turn manoeuvre in which the rear wheel W(3) on the right hand side of the vehicle 5 is the inside rear wheel. It will be understood that the operation of the control system 1 is the same during performance of a left turn manoeuvre in which the rear wheel W(4) on the left hand side of the vehicle 5 is the inside rear wheel. In dependence on detection of a wheel speed ripple WSR(3) in the wheel speed of the inside rear wheel W(3), the control system is configured to modify the parameters for detecting a wheel slip event SEV(n). The control system 1 may reduce the sensitivity of the control system 1 for detection of a wheel slip event SEV(n) in dependence on detection of the wheel speed ripple WSR(3) in the wheel speed of the inside rear wheel W(3). For example, a value defining a wheel speed variation (delta) which indicates a wheel slip event SEV(n) may be increased in dependence on detection of the wheel speed ripple WSR(3) in the wheel speed of the inside rear wheel W(3). Alternatively, or in addition, the control system 1 may inhibit detection of a wheel slip event SEV(n) in dependence on detection of the wheel speed ripple WSR(3) in the wheel speed W(3) of the inside rear wheel W(3). The detection of a wheel slip event SEV(n) may be inhibited on at least the inside rear wheel W(3). Alternatively, the detection of a wheel slip event SEV(n) may be inhibited on all of the wheels W(1)-W(4).

The control system 1 according to the present embodiment is configured to detect one or more wheel speed ripple WSR(3) in the wheel speed S(3) of the inside rear wheel W(3). The control system 1 receives the steer angle signal SAS1 representing the steer angle α measured by the steer angle sensor 37. The control system 1 processes the steer angle signal SAS1 to determine if the vehicle is performing a right turn manoeuvre or a left turn manoeuvre. The steer angle α is a positive value (+ve) when the steering wheel 33 is rotated to the right to perform a right turn manoeuvre; and the steer angle α is a negative value (-ve) when the steering wheel 33 is rotated to the left to perform a left turn manoeuvre. In the present example the steer angle α is a positive variable indicating that the vehicle is performing a right turn manoeuvre. The control system 1 identifies the rear wheel W(3) on the right hand side of the vehicle 5 as the inside rear wheel W(3) for the right turn manoeuvre. In particular, the control system 1 determines that the measured steer angle α indicates that the vehicle 5 is performing a right turn manoeuvre. In the present example, determining that the vehicle 5 is performing a right turn manoeuvre comprises determining that the steer angle α is a positive variable (i.e. α > 0°).

As outlined above, the wheel speed ripple WSR(3) in the wheel speed S(3) of the inside rear wheel W(3) is more likely to occur when the steering inputs are large, i.e. when the steer angle α is large. The detection of the wheel speed ripple WSR(3) in the wheel speed S(3) of the inside rear wheel W(3) may optionally be made dependent on a determination that the steer angle α is greater than or equal to a steer angle threshold SATH1. In the present embodiment, the detection of the one or more wheel speed ripple WSR(3) in the wheel speed S(3) of the inside rear wheel W(3) is dependent on the steer angle α being greater than or equal to the steer angle threshold SATH1 (i.e., α>=SATH1). The steer angle threshold SATH1 is predefined, for example in dependence on empirical data. The steer angle threshold SATH1 may be defined as a fixed value or as a proportion of the maximum steer angle α(max). For example, the steer angle threshold SATH1 may be defined as a percentage of the maximum steer angle α(max), for example one of the following: 60%, 70%, 80%, 90% or 95%. In the present embodiment, the steer angle threshold SATH1 is defined as 62.5% of the maximum steer angle α(max). This corresponds to a rotation of approximately 2.5 radians in each direction. The detection of the one or more wheel speed ripple WSR(3) in the wheel speed S(3) of the inside rear wheel W(3) is dependent on a positive determination that the steer angle α being greater than or equal to the steer angle threshold SATH1 (α>=SATH1). The control system 1 is configured to inhibit or disable detection of the wheel speed ripple WSR(3) in the wheel speed S(3) of the inside rear wheel W(3) in dependence on a determination that the steer angle α is less than the steer angle threshold SATH1 (α>=SATH1).

The sensor signals SLC(1)-SLC(4) represent the wheel speed S(1)-S(4) of each of the wheels W(1)-W(4). The measured wheel speeds S(1)-S(4) are compared to determine which is the fastest wheel speed SF. The control system 1 may implement a comparator to compare the wheel speeds S(n) to identify the fastest wheel speed SF. Alternatively, the control system 1 may receive an input signal which identifies the fastest wheel speed SF.

Detection of a wheel slip event SEV(n) at one or more of the driven wheels W(3), W(4) is appropriate when the vehicle 5 accelerates from stationary or low speeds. The control system 1 is configured to detect ripple in the wheel speed S(3) of the inside rear wheel W(3) only when the vehicle speed VREF is within a predetermined speed range. The speed range is defined by a first vehicle speed threshold VSTH1 and a second vehicle speed threshold VSTH2. The detection of the one or more wheel speed ripple WSR(3) in the wheel speed S(3) of the inside rear wheel W(3) is dependent on a determination that the vehicle speed VREF is greater than or equal to the first vehicle speed threshold VSTH1 and less than or equal to the second vehicle speed threshold VSTH2 (i.e., VSTH1<VREF<VSTH2). The control system 1 is configured to inhibit or disable detection of the wheel speed ripple WSR(3) in the wheel speed S(3) of the inside rear wheel W(3) in dependence on a determination that the vehicle speed VREF is less than the first vehicle speed threshold VSTH1 or greater than the second vehicle speed threshold VSTH2.

The control system 1 is configured to detect ripple in the wheel speed S(3) of the inside rear wheel W(3) only when the fastest wheel speed SF is greater than a wheel speed threshold WSTH1. The detection of the one or more wheel speed ripple WSR(3) in the wheel speed S(3) of the inside rear wheel W(3) is dependent on a fastest determination that the fastest wheel speed SF is greater than or equal to the wheel speed threshold WSTH1. The control system 1 is configured to inhibit or disable detection of the wheel speed ripple WSR(3) in the wheel speed S(3) of the inside rear wheel W(3) in dependence on a determination that the fastest wheel speed SF is greater than or equal to the wheel speed threshold WSTH1. The wheel speed threshold WSTH(1) may comprise a predefined value. For example, the wheel speed threshold WSTH(1) may be defined as 5km/h, 10m/h or 15km/h. Alternatively, the wheel speed threshold WSTH(1) may be variable. For example, the wheel speed threshold WSTH(1) may be calculated in dependence on a reference vehicle speed VREF and/or the steer angle α. The wheel speed threshold WSTH(1) may be calculated as the product of the reference vehicle speed VREF and a gain value K1. The gain value K1 may be a fixed value. In the present embodiment, the gain value K1 is determined in dependence on the reference vehicle speed VREF and/or the steer angle α. The gain value K1 may be inversely proportional to the steer angle α. The gain value K1 may be larger at a high steer angle α. Conversely, the gain value K1 may be smaller at a low steer angle α.

The wheel speed ripple WSR(3) in the wheel speed S(3) of the inside rear wheel W(3) is detected in dependence on a determination that the inside rear wheel W(3) has the fastest wheel speed. The control system 1 may, for example, compare the wheel speed S(3) of the inside rear wheel W(3) to the wheel speed S(1), S(2), S(4) of each of the other wheels W(1), W(2), W(4). The comparison may be made directly or indirectly to determine that the inside rear wheel W(3) has the fastest wheel speed. In the present embodiment, the control system 1 compares the wheel speed S(3) of the inside rear wheel W(3) to the wheel speed S(n) identified as being the fastest wheel speed SF. A wheel speed delta ΔS is calculated between the wheel speed S(3) of the inside rear wheel W(3) and the fastest wheel speed SF. The wheel speed delta ΔS is then compared to a speed difference threshold DTH1. The inside rear wheel W(3) is identified as having the fastest wheel speed SF in dependence on a determination that the wheel speed delta ΔS is less than or equal to the speed difference threshold DTH1. The detection of the one or more wheel speed ripple WSR(3) is dependent on a positive determination that the inside rear wheel W(3) has the fastest wheel speed SF. The control system 1 is configured to inhibit or disable detection of the wheel speed ripple WSR(3) in the wheel speed S(3) of the inside rear wheel W(3) in dependence on a determination that the inside rear wheel W(3) does not have the fastest wheel speed SF.

In the present embodiment, the control system 1 is configured to detect a wheel speed ripple WSR(3) in dependence on each of the above conditions being satisfied. In a variant, one or more of the conditions may be omitted. The control system 1 may optionally output a ripple detected signal RDS1 in dependence on the detection of the wheel speed ripple WSR(3) in the wheel speed S(3) of the inside rear wheel W(3). As described herein, one or more vehicle control systems may be controlled in dependence on the ripple detected signal RDS1. The ripple detected signal RDS1 may optionally indicate which one of the rear wheels W(3)-W(4) is experiencing the wheel speed ripple WSR(n) in the wheel speed S(3)-S(4).

The detection of a wheel slip event SEV(n) is controlled in dependence on the detection of the wheel speed ripple WSR(3) in the wheel speed S(3) of the inside rear wheel W(3). The control system 1 may, for example, increase thresholds for detecting a wheel slip events SEV(n). The sensitivity of the control system 1 to detect the wheel slip event SEV(n) may thereby be reduced. In the present embodiment, the control system 1 is configured to inhibit (or disable) detection of the wheel slip event SEV(n) in dependence in detection of a wheel speed ripple WSR(3) in the wheel speed S(3) of the inside rear wheel W(3). The control system 1 may optionally output a slip detection inhibit signal SDS1 in dependence on the detection of the wheel speed ripple WSR(3) in the wheel speed S(3) of the inside rear wheel W(3).

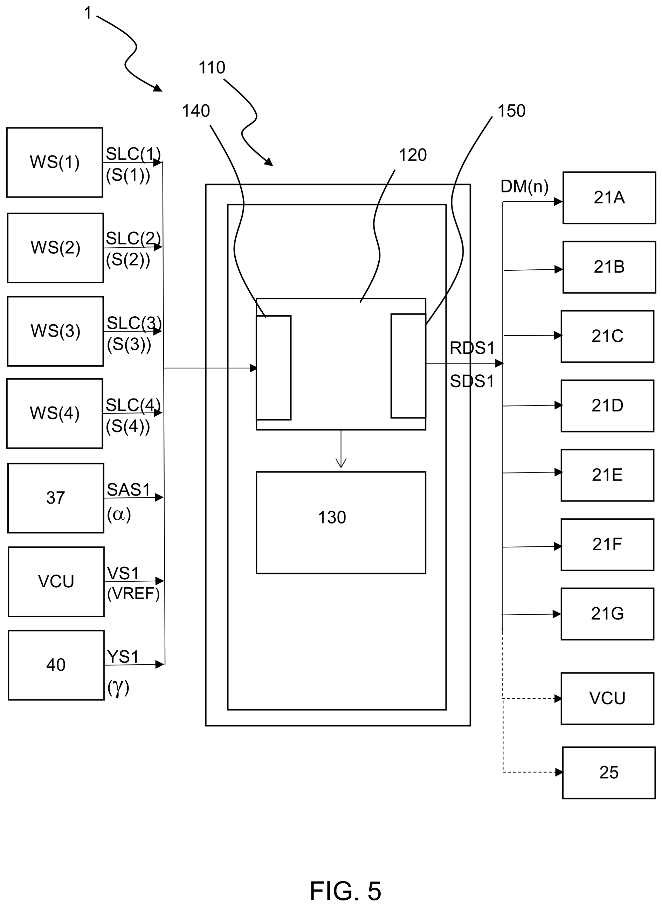

The control system 1 as illustrated in Figure 5 comprises one controller 110, although it will be appreciated that this is merely illustrative. The controller 110 comprises processing means 120 and memory means 130. The processing means 120 may be one or more electronic processing device 120 which operably executes computer-readable instructions. The memory means 130 may be one or more memory device 130. The memory means 130 is electrically coupled to the processing means 120. The memory means 130 is configured to store instructions, and the processing means 120 is configured to access the memory means 130 and execute the instructions stored thereon. The controller 110 comprises an input means 140 and an output means 150. The input means 140 may comprise an electrical input 140 of the controller 110. The output means 150 may comprise an electrical output 150 of the controller 110. The input 140 is arranged to receive the wheel speed signals SLC(1)-SLC(4) from the wheel speed sensors WS(1)-WS(4). The wheel speed signals SLC(1)-SLC(4) are electrical signals which are indicative of the wheel speed S(1)-S(4) of each of the wheels W(1)-W(4) of the vehicle 5. The wheel speed signals SLC(1)-SLC(4) are measured with respect to time. The input 140 is arranged to receive the steer angle signal SAS1 representing the steer angle α. The output 150 is arranged to output a wheel slip detected signal WSD(1)-WSD(4) which is indicative of the detection of a wheel slip event SEV(n). The wheel slip detected signal WSD(1)-WSD(4) identifies the or each wheel W(1)-W(4) experiencing a wheel slip event SEV(n). The output 150 also outputs the ripple detected signal RDS1 to indicate detection of the wheel speed ripple WSR(3) in the wheel speed S(3) of the inside rear wheel W(3). The output 150 also outputs the slip detection inhibit signal SDS1 to inhibit detection of the wheel slip event SEV(n). The ripple detected signal RDS1 may be output to control operation of one or more vehicle subsystems (denoted herein generally by the reference numeral 21).

The operation of the controller 110 to detect a wheel speed ripple WSR(3) in the wheel speed S(3) of the inside rear wheel W(3) will now be described. The controller 110 is configured to receive the steer angle signal SAS1 representing the steer angle α. The controller 110 identifies a right turn manoeuvre or a left turn manoeuvre in dependence on the steer angle α. The controller 110 determines which one of the left and right rear wheel W(3), W(4) is on an inside of the turn manoeuvre. In the present example, the steer angle α corresponds to a right turn manoeuvre and the controller 110 determines that the rear wheel W(3) on the right hand side of the vehicle 5 is the inside rear wheel W(3). The controller 110 compares the steer angle α to the steer angle threshold SATH1. If the steer angle α is greater than or equal to the steer angle threshold SATH1 (i.e., α>=SATH1), the controller 110 continues to the next stage for detecting a wheel speed ripple WSR(3) in the wheel speed S(3) of the inside rear wheel W(3). If the steer angle α is less than the steer angle threshold SATH1 (i.e., α<SATH1), the controller 110 continues to monitor the steer angle α. An absolute value of the steer angle α may be compared to the steer angle threshold SATH1. The steer angle α is used to determine which of the rear wheels W(3), W(4) is on an inside of the turn manoeuvre, i.e. to identify the inside rear wheel W(3), W(4).

The controller 110 receives a vehicle speed signal VS1 indicating a reference vehicle speed VREF. Alternatively, the reference vehicle speed VREF may be determined in dependence on the wheel speeds S(1)-S(4) of each wheel W(1)-W(4). Other techniques may be used to determine the vehicle speed VREF of the vehicle 5. The vehicle speed VREF is compared to the first and second vehicle speed thresholds VSTH1, VSTH2 to determine that the vehicle speed VREF is in the predefined speed range.

The controller 110 determines the fastest wheel speed SF. For example, the controller 110 can compare the wheel speeds S(1)-S(4) represented by the wheel speed signals SLC(1)-SLC(4) to identify the fastest wheel speed SF. The controller 110 compares the fastest wheel speed SF to the wheel speed threshold WSTH(1). In the present embodiment, the wheel speed threshold WSTH(1) is the product of the reference vehicle speed VREF and a gain value K1. The gain value K1 may be predefined or may be determined in dependence on the reference vehicle speed VREF and/or the steer angle α.

The controller 110 checks that the inside rear wheel W(3) has the fastest wheel speed SF. The wheel speed S(3) of the inside rear wheel W(3) is compared directly or indirectly to the wheel speed (S1), S(2), S(4) of the other wheels W(1), W(2), W(4). In the present embodiment, the controller 110 compares the wheel speed S(3) of the inside rear wheel W(3) to the fastest wheel speed SF. The controller 110 subtracts the wheel speed S(3) of the inside rear wheel W(3) from the fastest wheel speed SF to calculate the wheel speed delta ΔS. The wheel speed delta ΔS is then compared to a speed difference threshold DTH1. The controller 110 determines that the inside rear wheel S(3) has the fastest wheel speed SF in dependence on a determination that the wheel speed delta ΔS is less than the speed difference threshold DTH1. The controller 110 detects a wheel speed ripple WSR(3) in the wheel speed S(3) of the inside rear wheel W(3) in dependence on a determination that the wheel speed S(3) of the inside rear wheel W(3) is the fastest wheel speed SF. If the wheel speed S(3) of the inside rear wheel W(3) is greater than the wheel speed S(1), S(2), S(4) of each of the other wheels W(1), W(2), W(4) (i.e., the wheel speed S(3) of the inside rear wheel W(3) is the fastest wheel speed SF), the controller 110 detects a wheel speed ripple WSR(3) in the wheel speed S(3) of the inside rear wheel W(3). If the wheel speed S(3) of the inside rear wheel W(3) is less than the wheel speed S(1), S(2), S(4) of each of the other wheels W(1), W(2), W(4) (i.e., the wheel speed S(3) of the inside rear wheel W(3) is not the fastest wheel speed SF), no ripple is detected in the wheel speed S(3) of the inside rear wheel W(3).

The controller 110 is configured to output the ripple detected signal RDS1 in dependence on detection of the wheel speed ripple WSR(3) in the wheel speed S(3) of the inside rear wheel W(3). The controller 110 may adjust the parameters for detecting a wheel slip event SEV(n) in at least the inside rear wheel W(3). The controller 110 is configured to output the slip detection inhibit signal SDS1. The output of the slip detection inhibit signal SDS1 may be appropriate if a separate controller is configured to detect a wheel slip event SEV(n), for example. As described herein, the slip detection inhibit signal SDS1 may be output to one or more vehicle control unit VCU.

The control system 1 is incorporated into a system 15 provided on the vehicle 5, as illustrated in Figure 1. The system 15 comprises the control system 1 and at least one vehicle control unit VCU. The vehicle control unit(s) VCU is configured to control operation of one or more vehicle subsystems 21. As described herein, the control system 1 is in communication with the at least one vehicle control unit VCU. In particular, the control system 1 is configured to output the ripple detected signal RDS1 to the at least one vehicle control unit(s) VCU. Alternatively, or in addition, the control system 1 may be configured to output the slip detection inhibit signal SDS1 to the at least one vehicle control unit(s) VCU. The at least one vehicle control unit(s) VCU is configured to control operation of the one or more vehicle subsystems 21 in dependence on the ripple detected signal RDS1. In the present embodiment, the at least one vehicle control unit VCU is configured to inhibit changes to the one or more vehicle subsystem 21 in dependence on receipt of the ripple detected signal RDS1 received from the control system 1.

The or each vehicle control unit VCU comprises an electrical processor configured to receive the wheel slip detected signal(s) WSD(n) from the control system 1. The one or more vehicle control unit VCU controls operation of one or more of the vehicle subsystems 21 in dependence on the slip detection inhibit signal SDS1 generated by the control system 1. It will be understood that the vehicle control unit VCU and the control system 1 may be combined into the same control unit.

The vehicle 5 comprises a plurality of the vehicle subsystems (denoted generally by the reference numeral 21 and shown schematically in Figures 2 and 5). The vehicle subsystems 21 in the present embodiment include, but are not limited to, a traction control system 21A, a propulsion (or engine) management system 21B, a transmission system 21C, a steering system 21D, an anti-lock braking system (ABS) 21E, a suspension system 21F and a differential system 21G. The vehicle 5 may comprise less than or more than six (6) vehicle subsystems 21. The vehicle control unit VCU is provided to control operation of the vehicle subsystems 21). In particular, the vehicle control unit VCU is configured to control or to modify the operation of the at least one vehicle subsystem 21 in dependence on the slip detection inhibit signal SDS1 from the control system 1.

The vehicle control unit VCU may be configured to implement one or more vehicle drive mode DM(n). The or each vehicle drive mode DM(n) defines one or more operating parameter of at least one of the vehicle subsystems 21. Each vehicle drive mode configures the at least one of the vehicle subsystems 21 in dependence on the current or prevailing operating conditions. For example, the vehicle drive mode may configure the vehicle subsystems 21 in dependence on a determined (or estimated) surface friction. A first drive mode for controlling the vehicle subsystems 21 when the vehicle 5 is operating on a surface having a high coefficient of friction (such as a road); and a second drive mode for controlling the vehicle subsystems 21 when the vehicle 5 is operating on a surface having a low coefficient of friction (such as a wet grass or ice). At least in certain embodiments, the vehicle control unit VCU may inhibit changes to selected vehicle drive mode DM(n) in dependence on the slip detection inhibit signal SDS1 received from the control system 1. The detection of a ripple in the wheel speed S(3) caused by wheel skip at the inside rear wheel W(3) helps to avoid false positive detection of a wheel slip event SEV(n). A change in the selected vehicle drive mode DM(n) may be inhibited when the wheel speed ripple WSR(3) is detected. This may help to maintain selection of the appropriate vehicle drive mode DM(n) for the operating conditions.

The vehicle control unit VCU may comprise a surface friction estimator 25 for estimating a surface friction µ of a surface on which the vehicle 5 is operating. The estimated surface friction µ may be used as an indicator parameter for selecting one of the vehicle drive modes DM(n) described herein. The ripple detected signal RDS1 to indicate detection of the wheel speed ripple WSR(3) in the wheel speed S(3) of the inside rear wheel W(3) may be output to the surface friction estimator 25 to indicate detection of the wheel speed ripple WSR(3) in the wheel speed S(3) of the inside rear wheel W(3). The surface friction estimator 25 is configured to inhibit estimation of the surface friction µ in dependence on receipt of the ripple detected signal RDS1 to indicate detection of the wheel speed ripple WSR(3) in the wheel speed S(3) of the inside rear wheel W(3) from the control system 1. The surface friction estimator 25 may, for example, be configured to hold the estimated surface friction µ in dependence on receipt of the ripple detected signal RDS1. The estimated surface friction µ may be held constant while the ripple detected signal RDS1 is received.

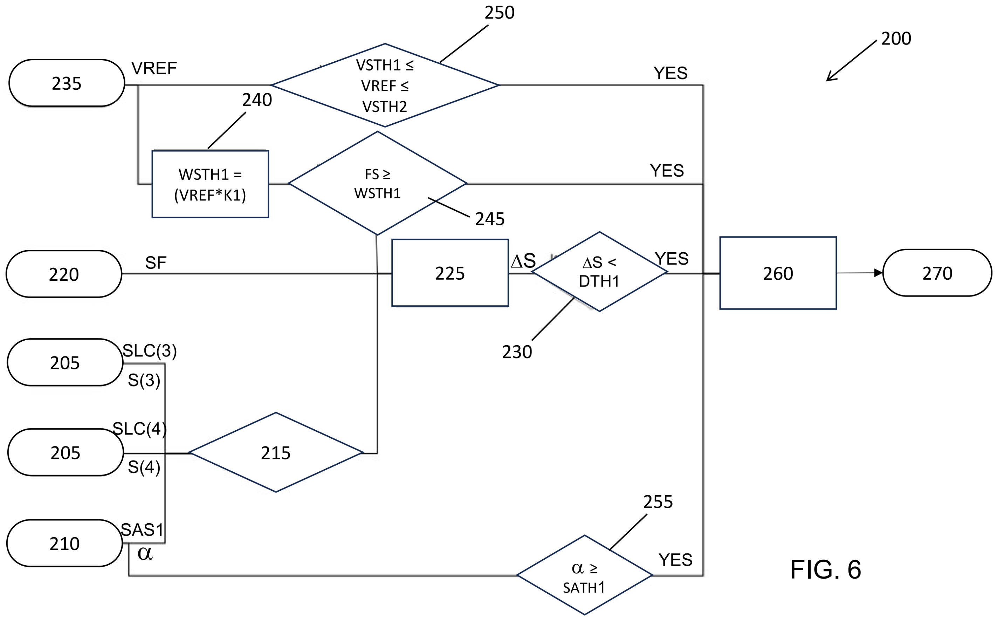

Figure 6 illustrates a method 200 according to an embodiment of the invention. The method 200 is a method of detecting a wheel speed ripple WSR(3) in the wheel speed S(3) caused by one or more wheel skip at the inside rear wheel W(3) of a vehicle 5, such as the vehicle 5 illustrated in Figure 1. The method 200 may be performed by the control system 1 illustrated in Figure 1. In particular, the memory device 130 may comprise computer-readable instructions which, when executed by the processor 120, perform the method 200 according to an embodiment of the invention. The method 200 will now be described with reference to Figure 6. The method 200 is described with reference to a right turn manoeuvre in which the right rear wheel W(3) is the inside rear wheel. It will be understood that the method 200 is also applicable for a left turn manoeuvre in which the left rear wheel W(4) is the inside rear wheel.

The method 200 comprises receiving the wheel speed signals SLC(1)-SLC(4) from the wheel speed sensors WS(1)-WS(4) (BLOCK 205). The method 200 comprises receiving a steer angle signal SAS1 representing the steer angle α of the vehicle 5 to perform a turn manoeuvre (BLOCK 210). The method 200 comprises determining which one of the wheels W(1)-W(4) of the vehicle 5 is an inside rear wheel of the vehicle in dependence on the steer angle signal SAS1 (BLOCK 215). The inside rear wheel is disposed on an inside of the turn manoeuvre. The method may comprise charactering the turn manoeuvre as a left turn manoeuvre or a right turn manoeuvre in dependence on the steer angle α indicated by the steer angle signal SAS1. The rear right wheel W(3) is identified as the inside rear wheel for a right turn manoeuvre. The rear left wheel W(4) is identified as the inside rear wheel for a left turn manoeuvre. In the present example, the steer angle α indicates that the vehicle is performing a right turn manoeuvre and the rear right wheel W(3) is identified as the inside rear wheel.

The detection of a wheel speed ripple WSR(3) is dependent on a positive determination that the wheel speed S(3) of the inside rear wheel W(3) is faster than the wheel speed S(1), S(2), S(4) of each of the other wheels W(1), W(2), W(4). The method 200 comprises determining the fastest wheel speed SF (BLOCK 220). The method 200 comprises comparing the wheel speed S(3) of the inside rear wheel W(3) to the fastest wheel speed SF . The wheel speed S(3) of the inside rear wheel W(3) is subtracted from the fastest wheel speed SF to calculate the wheel speed delta ΔS (BLOCK 225). The wheel speed delta ΔS is then compared to a speed difference threshold DTH1 (BLOCK 230). The controller 110 determines that the inside rear wheel S(3) has the fastest wheel speed SF in dependence on a determination that the wheel speed delta ΔS is less than the speed difference threshold DTH1. The method 200 may be re-started in dependence on a determination that the wheel speed delta ΔS is greater than the speed difference threshold DTH1.

The detection of a wheel speed ripple WSR(3) is dependent on a positive determination that the fastest wheel speed FS is greater than the threshold wheel speed WSTH1. The vehicle speed VREF is received (BLOCK 235). A threshold wheel speed WSTH1 is calculated by multiplying the vehicle speed VREF by a predetermined gain value (K1) (BLOCK 240). A check is performed to determine if the fastest wheel speed FS is greater than the threshold wheel speed WSTH1 (BLOCK 245). The method 200 may be re-started in dependence on a determination that the fastest wheel speed FS is less than the threshold wheel speed WSTH1.

The detection of a wheel speed ripple WSR(3) is dependent on a positive determination that the vehicle speed VREF1 is within a predetermined operating range. A check is performed to determine that the vehicle speed VREF1 is greater than or equal to the first vehicle speed threshold VSTH1 and less than the second vehicle speed threshold VSTH2 (BLOCK 250). The method 200 may be re-started in dependence on a determination that the threshold wheel speed WSTH1 is outside the range.

The detection of a wheel speed ripple WSR(3) is dependent on a positive determination that the steer angle α is is greater than the steer angle threshold SATH1. The steer angle α is determined (BLOCK 210). A check is performed to determine that the steer angle α is greater than or equal to the steer angle threshold SATH1 (BLOCK 255). The method 200 is re-started in dependence on a determination that the threshold wheel speed WSTH1 is outside the range.

The method 200 comprises detecting the wheel speed ripple WSR(3) in dependence on a positive determination of each of the operating conditions (BLOCK 260).

The method 200 comprises controlling detection of a wheel slip event SEV(n) in dependence on detection of the wheel speed ripple WSR(3) in the wheel speed S(3) of the inside rear wheel W(3) (BLOCK 270). For example, detection of the wheel slip event SEV(n) may be inhibited on at least the inside rear wheel W(3) for a predetermined time period or while the wheel speed ripple WSR(3) is detected in the wheel speed S(3) of the inside rear wheel W(3). In the present embodiment, detection of the wheel slip event SEV(n) is inhibited on each wheel W(1)-W(4) while the wheel speed ripple WSR(3) is detected. Alternatively, or in addition, the method 200 may comprise outputting a slip detection inhibit signal to inhibit detection of a slip event SEV(n) (BLOCK 255). The method 200 continues while the vehicle 5 is operating.

The control system 1 and the method 200 comprise comparing the wheel speed S(1)-S(4) of each of the wheels W(1)-W(4) while the vehicle 5 performs the turn manoeuvre. There is an inherent difference in the wheel speeds of the wheels on the inside of the turn manoeuvre and the wheels on the outside of the turn manoeuvre. The control system 1 and the method 200 may comprise modifying the wheel speeds S(1)-S(4) measured by the wheel speed sensors WS(1)-WS(4) to compensate for this variation. The compensation may, for example, be made in dependence on the steer angle α. Optionally, the compensation may also be made in dependence on a yaw rate of the vehicle 5 during the turn manoeuvre. The yaw rate γ may be measured by an inertial measurement unit (IMU) 40 provided on the vehicle 5.

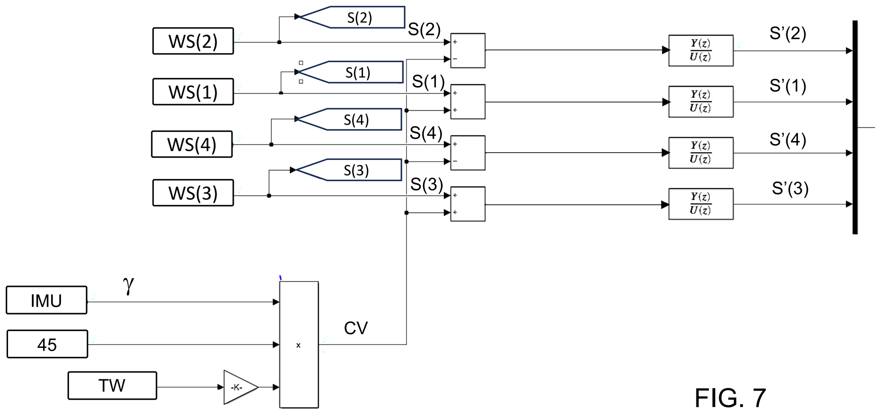

A schematic representation of a control module 45 for modifying the wheel speeds S(1)-S(4) is shown in Figure 7. The yaw rate γ of the vehicle 5 is measured by the IMU 40. The IMU 40 output a yaw signal YS1 indicating the measured yaw rate γ. The IMU 40 also determines a direction of travel of the vehicle 5 (i.e. forward or reverse) by measuring acceleration along the longitudinal axis Z. A compensation value CV is calculated by multiplying the measured yaw rate γ with a stored vehicle track width (TW), a gain value K1 and a vehicle direction of travel (forward or reverse). The direction of travel is indicated by a direction indicator 45. The compensation value CV is added to the wheel speed S(2), S(4) of the wheels W(2), W(4) on the left of the vehicle 5; and subtracted from the wheel speed S(1), S(3) of the wheels W(1), W(3) on the right of the vehicle 5. It will be understood that for a turning manoeuvre in the opposite direction (i.e., to the left in the illustrated example) the compensation value CV is subtracted from to the wheel speed S(2), S(4) of the wheels W(2), W(4) on the left of the vehicle 5; and added to the wheel speed S(1), S(3) of the wheels W(1), W(3) on the right of the vehicle 5. The addition and subtraction of the compensation value CV to the wheel speeds S(1)-S(4) is controlled in dependence on the yaw rate γ of the vehicle 5. The resulting modified (adjusted) wheel speeds S'(1)-S'(4) are used by the control system 1 to perform the method(s) described herein. The modified wheel speeds S(n)' may be used as the wheel speed S(n) for detecting a wheel speed ripple WSR(n). In particular, the control system 1 and the method 200 described herein may utilise the modified wheel speed S(n)' to detect the wheel speed ripple WSR(n). A modified wheel speed S(3)' for the inside rear wheel W(3) is shown in Figure 4 by way of example. It will be understood that the detection of the wheel speed ripple WSR(3) may change when the modified wheel speed S(3)' is used. At least in certain embodiments, the modified (adjusted) wheel speeds S'(1)-S'(4) provide an increased accuracy in the detection of the wheel speed ripple WSR(n).

It will be appreciated that various changes and modifications can be made to the present invention without departing from the scope of the present application. The vehicle 5 may comprise a rear wheel steer system (not shown) for steering the rear wheels W(3), W(4). The control module 45 may be configured to modify the wheel speeds S(1)-S(4) in dependence on the a rear wheel steer angle. For example, the compensation value CV may be calculated in dependence on the rear wheel steer angle.

The steer angle α of the vehicle 5 may be determined in dependence on the front wheel steer angle and the rear wheel steer angle. The control system 1 and the method 200 described herein may utilise a steer angle α determined in dependence on the front wheel steer angle and the rear wheel steer angle. At least in certain embodiments, the steer angle α of the vehicle 5 may comprise a sum of the steer angle of the front and rear wheels W(1)-W(4). The steer angle signal SAS1 may indicate the steer angle α determined by summing the front steer angle and the rear steer angle.

The control system 1 and method 200 described herein utilise the steer angle steer angle α of the vehicle 5 to determine which of the wheels W(1)-W(4) is the inside rear wheel W(3)-W(4). Alternatively, or in addition, the inside rear wheel W(3)-W(4) may be determined by measuring the yaw angle γ of the vehicle 5.

## Claims

1. A control system for controlling detection of a wheel slip event) on a vehicle having a plurality of wheels); the control system comprising one or more processors collectively configured to:
receive a steer angle signal indicating a steer angle of the vehicle to perform a turn manoeuvre;
determine which one of the wheels) is an inside rear wheel) of the vehicle in dependence on the steer angle signal, the inside rear wheel) being disposed on an inside of the turn manoeuvre;
receive at least one wheel speed signal)) indicating a wheel speed) of each of the plurality of wheels);
determine a fastest wheel speed) of the plurality of wheels);
detect one or more inside rear wheel speed ripple) in dependence on a determination that the wheel speed) of the inside rear wheel) is the fastest wheel speed); and
control detection of a wheel slip event) on at least the inside rear wheel) in dependence on detection of the one or more inside rear wheel speed ripple).

2. A control system as claimed in claim 1, wherein the one or more inside rear wheel speed ripple) is detected in dependence on a determination that the fastest wheel speed) is greater than a wheel speed threshold).

3. A control system as claimed in claim 2, wherein the one or more processors is collectively configured to:
receive a vehicle speed signal) indicating a vehicle speed; and
determine the wheel speed threshold) in dependence on the vehicle speed.

4. A control system as claimed in claim 3, wherein determining the wheel speed threshold) comprises multiplying the vehicle speed by a gain value.

5. A control system as claimed in claim 4, wherein the gain value is determined in dependence on one or more of the steer angle and the vehicle speed.

6. A control system as claimed in any one of claims 3, 4 or 5, wherein the one or more inside rear wheel speed ripple) is detected in dependence on a determination that the vehicle speed is greater than a first vehicle speed threshold and/or less than a second vehicle speed threshold.

7. A control system as claimed in any one of the preceding claims, wherein the one or more inside rear wheel speed ripple) is detected in dependence on a determination that the steer angle of the vehicle is greater than a steer angle threshold.

8. A control system as claimed in any one of the preceding claims, wherein determining that the wheel speed of the inside rear wheel is the fastest wheel speed comprises directly or indirectly comparing the wheel speeds of the wheels.

9. A system comprising the control system claimed in any one of the preceding claims and at least one vehicle control unit for controlling at least one vehicle subsystem of the vehicle, the at least one vehicle control unit being configured to inhibit changes to the one or more vehicle subsystem of the vehicle in dependence on detection of the one or more inside rear wheel speed ripple).

10. A system comprising the control system claimed in any one of the preceding claims 1 to 8 and at least one vehicle control unit for selecting one of a plurality of vehicle drive modes), the vehicle drive modes) each defining one or more operating parameter of at least one vehicle subsystem, wherein the at least one vehicle control unit is configured to inhibit changes to the selected one of the vehicle drive modes) in dependence on detection of the one or more inside rear wheel speed ripple).

11. A system comprising the control system claimed in any one of claims 1 to 8 and a surface friction estimator for estimating a surface friction of the surface on which the vehicle is operating, the surface friction estimator being configured to inhibit estimation of the surface friction in dependence on detection of the one or more inside rear wheel speed ripple).

12. A vehicle comprising a control system as claimed in anyone of claims 1 to 8; or a system as claimed in claim 9, 10 or 11.

13. A method for controlling detection of a wheel slip event) for a vehicle having a plurality of wheels); the method comprising:
determining a steer angle of the vehicle to perform a turn manoeuvre;
identify which one of the plurality of wheels) is an inside rear wheel) of the vehicle in dependence on the steer angle, the inside rear wheel) being disposed on an inside of the turn manoeuvre;
determine the wheel speed) of each of the plurality of wheels);
detect one or more inside rear wheel speed ripple) in dependence on a determination that the wheel speed) of the inside rear wheel) is the fastest wheel speed); and
control detection of a wheel slip event) on at least the inside rear wheel) in dependence on detection of the one or more inside rear wheel speed ripple).

14. A method as claimed in claim 13 comprising determining the wheel speed threshold) in dependence on a speed of the vehicle.

15. Computer readable instructions which, when executed by one or more processors, cause the one or more processors to perform the method according to any of claims 13 or 14.
